Europäisches Patentamt

(19) **European Patent Office**

**Office européen des brevets**

(11) Veröffentlichungsnummer: **0 050 180**
**B1**

(12) ## EUROPÄISCHE PATENTSCHRIFT

(45) Veröffentlichungstag der Patentschrift:
**03.07.85**

(51) Int. Cl.⁴: **F 24 J 3/06, E 04 H 17/00**

(21) Anmeldenummer: **81101527.0**

(22) Anmeldetag: **04.03.81**

(54) **Absorberzaunanlage als grossflächiger Wärmetauscher.**

(30) Priorität: **16.10.80 DE 3039062**

(43) Veröffentlichungstag der Anmeldung:
**28.04.82 Patentblatt 82/17**

(45) Bekanntmachung des Hinweises auf die Patenterteilung:
**03.07.85 Patentblatt 85/27**

(84) Benannte Vertragsstaaten:
**AT BE CH FR GB IT LI LU NL SE**

(56) Entgegenhaltungen:
**EP - A - 0 027 503**
**EP - A - 0 036 041**
**GB - A - 1 140 926**

(73) Patentinhaber: **VEREINIGTE ALUMINIUM-WERKE AKTIENGESELLSCHAFT,**
**Georg-von-Boeselager-Strasse 25, D-5300 Bonn 1 (DE)**

(72) Erfinder: **Dick, Günter, Ing. grad., Sperlingsweg 4,**
**D-5205 St. Augustin (DE)**

(74) Vertreter: **Müller-Wolff, Thomas, Dipl.-Ing., c/o**
**Vereinigte Aluminium-Werke AG Patentabteilung**
**Postfach 2468, D-5300 Bonn 1 (DE)**

## Beschreibung

Die Erfindung betrifft eine Absorber-Zaunanlage als grossflächigen Wärmetauscher für Gebäudeheizung oder Kühlung mittels Wärmepumpen, bestehend aus mehreren Wärmetauscherprofilen, die an Zaunpfosten angebracht sind.

Aus «RWE informiert» 166, Sonderdruck zur Hannover-Messe 1980, Seiten 13–15, ist eine Absorber-Zaunanlage als grossflächiger Wärmetauscher bekannt, der aus mehreren Wärmetauscherprofilen besteht. Diese Zaunanlage besteht aus Kunststoffrohren. Bei dieser Konstruktion findet eine Wärmeübertragung von der Umgebungsluft auf die Kunststoffrohre nur unvollkommen statt. Ferner ist ein Sichtschutz der Zaunanlage nicht gewährleistet.

Aus der DE-A-2 415 656 ist ein Wärmetauscher mit im Abstand zueinander angeordneten Rippen bekannt, bei dem die Wärmetauscherrohre zur Steigerung des Wärmeübergangs Durchbrüche aufweisen. Die Wärmetauscherprofile selbst sind jedoch glattflächig als sogenannte Energiestapel oder Wärmetauscherplatten-Blöcke ausgeführt, die üblicherweise im Rauminneren aufgestellt werden. Bei einer Installation im Aussenbereich muss zur Vermeidung grösserer Verschmutzung entweder eine besondere Abdeckung oder eine spezielle Reinigungsmöglichkeit vorhanden sein.

Aus der DE-A-2 530 152 ist ein Kollektorenelement zur Ausnutzung der Sonnenwärme bekannt, das horizontal oder geneigt auf eine stabile Unterlage aufgelegt und befestigt werden kann (Seite 4, 1. Abs.). Diese Kollektorelemente haben eine geschlossene Abdeckung, wodurch der Wirkungsgrad bei einem grossflächigen Wärmetauscher herabgesetzt wird. Eine Anbringung als Zaunanlage ist nicht dargestellt. Der natürliche Windzug würde auch bei einer solchen Anbringung stark vermindert bzw. ein Durchströmen quer zur Zaunfläche unmöglich gemacht.

Aufgabe der vorliegenden Erfindung ist es daher, einen grossflächigen Wärmetauscher für eine Absorber-Zaunanlage herzustellen, der einen hohen Wirkungsgrad aufweist, einen Sichtschutz gewährleistet und dessen einzelne Profile einfach montierbar, leicht transportabel und so installiert sind, dass sie nur eine geringe Verschmutzung auch nach längerer Standzeit aufweisen.

Erfindungsgemäss wird diese Aufgabe mit einem Wärmetauscher der eingangs genannten Art dadurch gelöst, dass die einzelnen Wärmetauscherprofile einen trapez- oder u-förmigen Querschnitt mit Basisflächen 11, Stegflächen 12a, b und Abkantungen 13a, b aufweisen, wobei die eine Stegfläche 12a im wesentlichen parallel zu Verkleidungsprofile 26 der Zaunpfosten 2a, b, c verläuft und zur gegenüberliegenden Abkantung 13b parallel angeordnet ist und die Basisflächen 11 der Wärmetauscherprofile in einem Winkel zwischen 5 und 30 Grad zur Horizontalen geneigt sind, wobei die Wärmetauscherprofile jeweils eine Wärmeträgerleitung in der Mittelachse aufweisen.

Die vorwiegend stranggepressten Wärmeträgerprofile können an ihren beiden Enden so ausgestanzt werden, dass das eigentliche Rohrteil bestehen bleibt. Durch anschliessendes Rundfräsen können diese kurzen überstehenden Rohrenden die Anschlusteile für die bei der Montage anzubringenden Rohrverbindungsglieder bilden. Übereinander angeordnet bilden die einzelnen Wärmetauscherprofile 1 ein z. B. soledurchflossenes Wärmetauscherelement.

Die Wärmetauscherprofile können in gleicher Form auch als Verbundprofile aus Metallblechen und Strangpressprofilen unter Zwischenschaltung einer Wärmeleitpaste, wie in DE-A-3 010 523 beschrieben, hergestellt werden.

Die gewählten Profilformen der Wärmetauscherelemente erfüllen erfindungsgemäss folgende Anforderungen:

1. in einem gewissen Abstand übereinander angeordnet ist ein vollkommener Sichtschutz gewährleistet, wobei jedoch genügend Durchlüftung quer zur Zaunfläche möglich ist.

2. alle Flächen sind so schräg gegen die Horizontale eingestellt, dass Schmutz durch Regen und Wind automatisch abgewaschen und enffernt werden.

3. die Profilenden bilden Abreisskanten für die Windströmung, wodurch eine Turbulenz innerhalb des Profilquerschnitts entsteht, und so ein verbesserter Wärmeübergang von der Umgebungsluft auf das Profilmaterial stattfinden kann. Dieser Effekt wird verstärkt, wenn man entsprechende Durchbrüche mit Luftleitzungen in Profil-Längsrichtung in bestimmten Abständen anordnet.

4. die gewählte Profilform gewährleistet ein einfaches, kompaktes und raumsparendes Stapeln der Elemente, was für Fertigung und vor allem für den Vertrieb einen entscheidenden Vorteil bietet.

5. insbesondere die gewählte U-form ermöglicht, dass Vorder- und Rückseite des Zaunes den gleichen wetterfesten Farbanstrich aufweisen, wenn nur die Profilaussenseite entsprechend lackiert ist, die Profilinnenseite kann ohne Anstrich oder mit einem preisgünstigeren Schutzlack versehen werden.

6. die Wärmetauscherprofile sind durch ihre Form eigenstabil bei geringstmöglichem Materialeinsatz und widerstehen den auftretenden Belastungen.

7. Form und Farbe lassen die Wärmetauscherprofile den ästhetischen Anforderungen vollauf genügen.

8. die Längenabmessung der Wärmetauscherprofile können standardisiert werden, bei ca. 2–3 m sind sie leicht zu handhaben.

9. die Standardlängen weisen beidseitig Rohranschlussenden auf, so dass z. B. über Gummigewebeschläuche, Edelstahlwellschläuche, Rohrverschraubungen, Pressfittings oder dergl. eine flüssigkeitsdichte Rohrverbindung an der Montagestelle geschaffen werden kann. Rohrverschraubung und Pressfitting lassen sogar gasdichte Verbindungen zu, wenn der Absorberzaun mit Frigen gefüllt und durch Direktverdampfung betrieben werden sollte.

10. die Ausrichtung der Wärmetauscherprofile und die Sicherung gegen Verdrehen durch Windkräfte geschieht über Verkleidungsbleche, die nur an die Zaunpfosten angeschraubt werden.

Das Zaunsystem ist vorteilhaft in Baugruppen, sog. Module, eingeteilt. Durch Hinzufügen weiterer Absorberfelder, wobei auch hier eine standardisierte Anzahl Wärmetauscherprofile pro Absorberfeld erhebliche Vertriebsvorteile bringt, kann die Absorber-Zaunanlage den jeweils erforderlichen Wärmeentzugsleistungen stufenweise angepasst werden.

Die Einspeisung mit dem Wärmeträgermedium (Sole oder Frigen) wird erfindungsgemäss von einer Stelle kurz über dem Erdboden, am Anfangspfosten vorgenommen. Dies erspart bei der Installation Rohrverlegungskosten vom Absorber zur Wärmepumpe.

Um gleichweite Durchströmungswege des Wärmeträgermediums durch die einzelnen Wärmetauscherprofile und gleichverteilte Druckverhältnisse zu erhalten, werden diese an die Verteilerleitungen angeschlossen, dass jeweils 2 übereinander angeordnete Wärmetauscherprofile über die gesamte Zaunlänge hinweg ein Wärmetauscherpaar mit Vor- und Rücklauf bilden. Die Paare werden jeweils am Endpfosten über 180° Rohrverbindungsbogen miteinander verbunden. Die Entlüftung des Absorber-Zaunsystems erfolgt vorteilhaft an der höchstgelegenen Stelle des Anfangspfostens, und zwar im 180° Rohrbogen, der die Rücklaufleitung und die Druckausgleichsleitung miteinander verbindet.

Die Zaunpfosten sind nach den statischen Erfordernissen durch Winddruck und Sog in Doppel-T-Form ausgebildet. Um die Wärmetauscherprofile am Zaunpfosten zu befestigen, sind besondere Halter vorgesehen, die in vertikaler Richtung frei verschiebbar sind, um ein genaues Ausrichten der einzelnen Wärmetauscherprofile zu ermöglichen. Dieses genaue Ausrichten wird erforderlich, um das System im Betrieb einwandfrei entlüften zu können. Erfindungsgemäss erhalten die I-förmigen Zaunpfosten angepresste Nuten, in denen sowohl übliche Sechskantschrauben als auch Flachrundschrauben mit Vierkantansatz (DIN 603) verdrehsicher mit dem Schraubenkopf eingeführt und in vertikaler Richtung frei verschiebbar sind. Um Verwechslungen beim Einbetonieren der Pfostenprofile zu vermeiden, erhalten diese jeweils auf beiden Seiten eine gleiche Schiebenut. Dies hat ausserdem den Vorteil, dass gegebenenfalls auf der Zaunrückseite Stützprofile oder dergl. in jeder beliebigen Höhe angeschraubt werden können, ohne irgendwelche Bohrungen am Pfosten ausführen zu müssen.

Ein Herausheben der Wärmetauscherprofile aus den Haltern wird erfindungsgemäss dadurch verhindert, dass durch Einsägen oder Einstanzen zweier Schlitze im vorderen senkrecht stehenden Teil eine Zunge gebildet wird, die durch einfaches Umbiegen mittels Hammer oder dergl. ein Gegenlager bildet. Die beiden hierbei rechts und links senkrecht stehenbleibenden Teile bilden die Befestigungslager für das vordere Pfostenverkleidungsblech.

In den Zaunpfostenbereichen werden jeweils von der Zaun-Vorder- und -Rückseite Verkleidungsbleche mittels Blechschrauben oder Nieten befestigt. Diese Verkleidungsbleche haben nicht nur die Aufgabe, die Rohrverbinder gegen Fremdeinwirkung zu schützen und den ästhetischen Ansprüchen zu genügen, sondern diese Formbleche bilden gleichzeitig das Widerlager für die Wärmetauscherprofile, so dass ein Verdrehen unmöglich gemacht wird. Ein weiteres Verbinden der Verkleidungsbleche mit den Wärmetauscherprofilen ist somit nicht erforderlich.

Im Folgenden soll die Erfindung anhand mehrerer bildlicher Darstellungen näher erläutert werden. Es zeigen:

Fig. 1 eine perspektivische Darstellung zweier Zaun-Module mit dem Anfangspfosten inkl. Einspeisestelle und Verteilerleitungen, dem Mittelpfosten und Endpfosten mit dem 180° Rohrverbindungen. Die Verkleidungsbleche an den Pfosten sowie die Wärmetauscherhalter wurden hierbei der Übersichtlichkeit wegen nicht miteingezeichnet.

Fig. 2 vergrösserte Darstellung der Wärmetauscherprofile im Querschnitt gemäss Schnitt I–I der Fig. 1. Angedeutet wird hierbei auch die Winddurchströmung mit Turbulenzerzeugung.

Fig. 3 eine alternative Ausführung eines trapezförmigen Wärmetauscherprofils im Querschnitt mit stranggepresstem Wärmeträgerrohr.

Fig. 4 Querschnitt durch eine alternative Ausführung mit Ausstanzungen (Windleitzungen) im Bereich der Stege des trapezförmigen Wärmetauscherprofils zwecks Turbulenzerhöhung und dadurch Verbesserung des Wärmeüberganges.

Fig. 5 eine perspektivische Darstellung der Wärmetauscherprofil-Auflagerung im Bereich eines Mittel-Zaunpfostens mit dem Halter und der darin gelagerten Wärmetauscherprofil-Verbindung.

Fig. 6 einen horizontalen Schnitt durch einen mittleren Zaunpfosten gemäss Schnitt II–II/Fig. 1.

Fig. 7 einen horizontalen Schnitt durch den Anfangspfosten mit Verteilerleitungen gemäss Schnitt III–III/Fig. 1.

Fig. 8 die Wärmetauscherprofile mit trapezförmigem Querschnitt im gestapelten Zustand, z. B. innerhalb einer Verpackungseinheit.

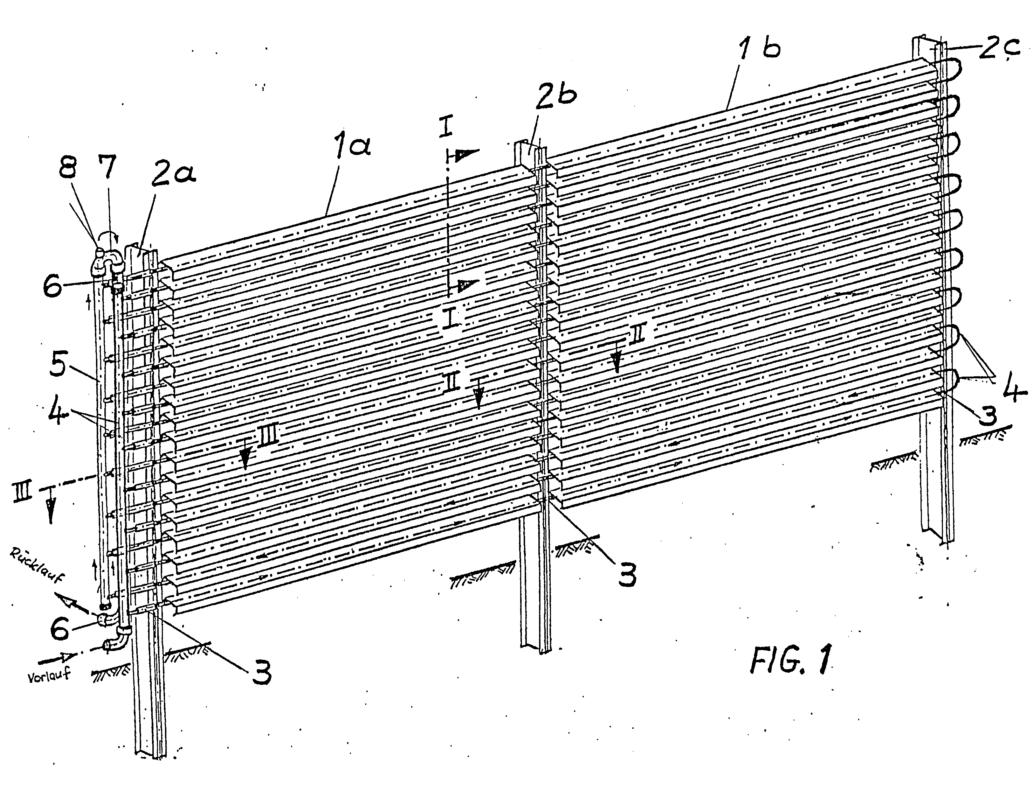

In Fig. 1 sind Wärmetauscherprofile 1a, 1b gezeigt, die zwischen Zaunpfosten 2a, 2b, 2c angeordnet sind. Das Wärmetauschermedium wird über Rohr-Verbindungsanschlüsse 3 geleitet. Im Bereich des Anfangspfostens 2a führen diese einerseits zu der Vorlauf-Verteilerleitung 4 mit angeschweissten Anschlussnippeln und andererseits über die jeweils benachbarten Wärmetauscherprofile in die Rücklauf-Verteilerleitung 5 mit ebenfalls angeschweissten Anschlussnippeln. Zwischen beiden ist ein Druckausgleichsrohr 6 angeordnet, das eine gleichmässige Durchströmung des Wärmeträgermediums (Sole oder Frigene) durch die gesamte Absorberzaunanlage ermöglicht. Durch die perspektivische Darstellung wird das Druckausgleichsrohr 6 weitgehend von dem davor liegenden Verteilerrohr 4 verdeckt. Zwischen Rücklaufleitung 5 und Druckausgleichsrohr 6 ist ein Rohr-Umkehrbogen 7 installiert. An seinem höchsten Punkt befindet sich ein Entlüftungsventil 8.

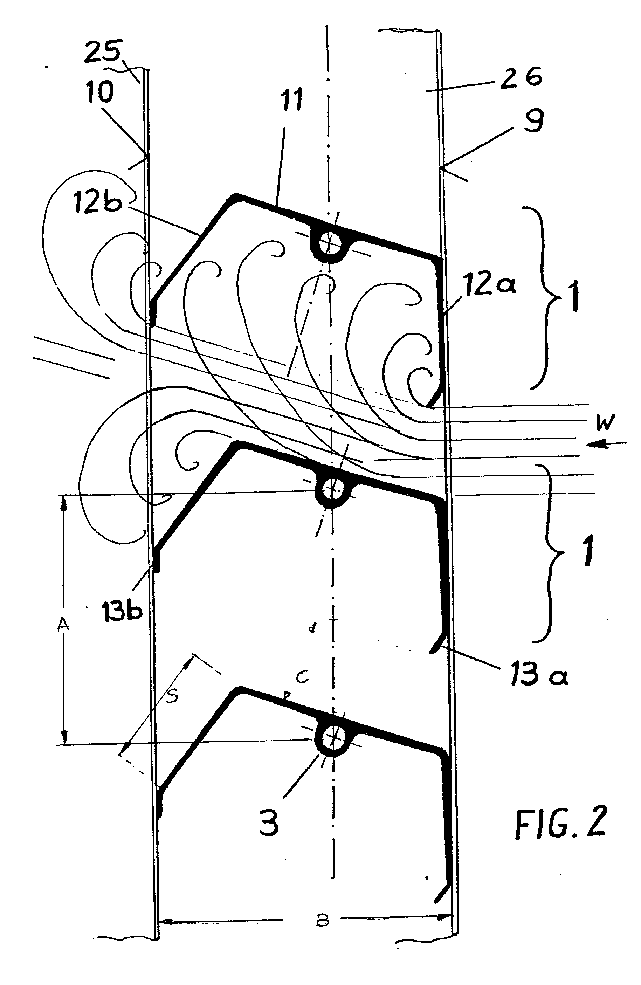

In Fig. 2 erkennt man mehrere im Querschnitt dargestellte Wärmetauscherprofile 1 (Trapezquerschnitt), die jeweils eine Basisfläche 11 und jeweils zwei Stegflächen 12a, 12b und zwei Abkantungen 13a, 13b aufweisen. Es ist zu erkennen, dass die Stegfläche 12a mit der Anschlagfläche 9 des Verkleidungsprofils 26 und die Abkantung 13b mit der Anschlagfläche 10 des Verkleidungsprofils 25 in Kontakt steht. Ausserdem ist in Fig. 2 die Turbulenzerzeugung innerhalb des Zwischenraums durch Wind zwischen zwei trapezförmigen Wärmetauscherprofilen dargestellt.

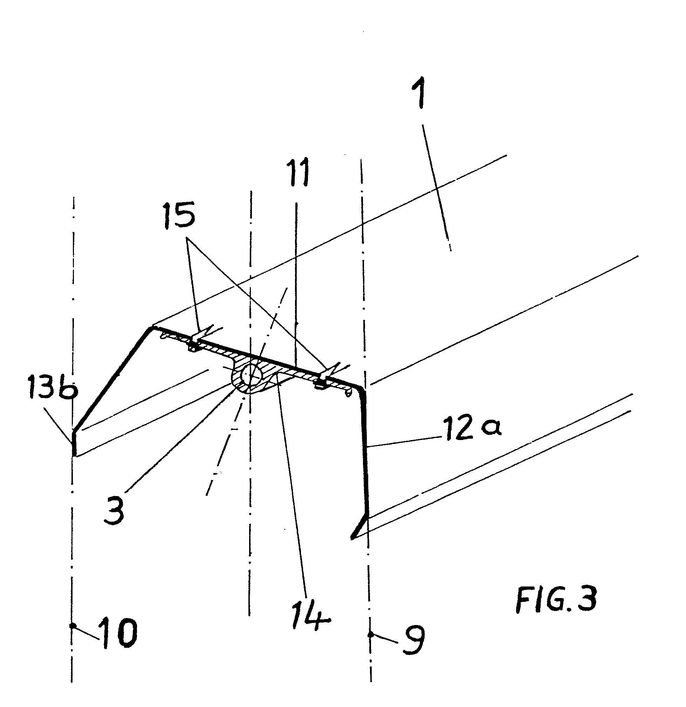

Fig. 3 zeigt eine alternative Ausführung des Wärmetauscherprofils 1 mit einem angenieteten Rohr-Flansch-Strangpressprofil 14 und soleführendem Rohranschluss 3. Mit 15 sind die Pressnietungen für das Rohr-Pressprofil angedeutet. 11 ist die Basis des Wärmetauscherprofils, 12a eine Stegfläche und 13b eine Abkantung. In strichpunktierter Linie sind die Kontaktstellen zwischen Stegfläche und Anschlagfläche 9 einerseits und Abkantung 13b sowie Anschlagfläche 10 andererseits dargestellt.

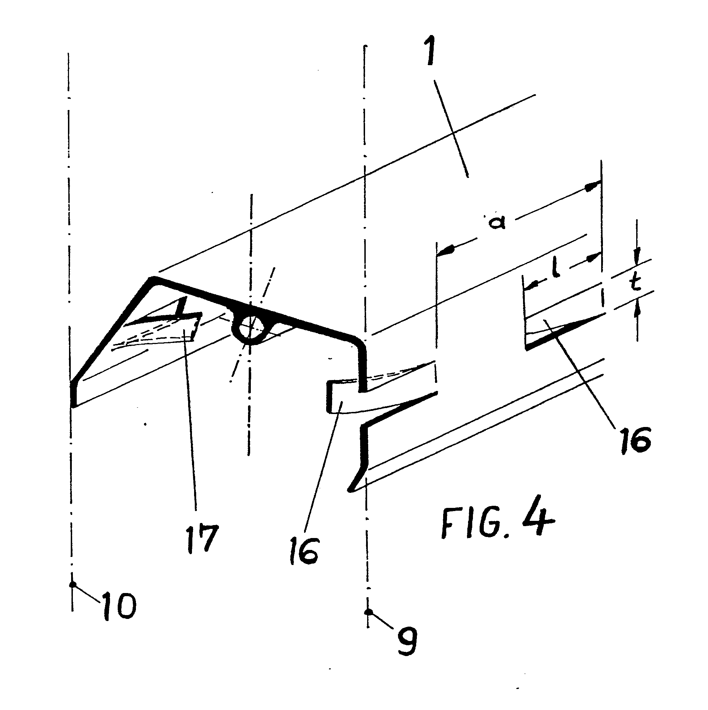

In Fig. 4 ist das Wärmetauscherprofil 1 mit Windleitzungen 16, 17 dargestellt. Die Breite der Windleitzungen t beträgt vorzugsweise ein Drittel der Steghöhe s, die Länge 1 entspricht vorzugsweise der Hälfte bis einem Drittel des Abstandes a der Windleitzungen untereinander. Unter diesen Verhältnissen wird eine besonders günstige Turbulenzerzeugung zwischen den Wärmetauscherprofilen erzielt.

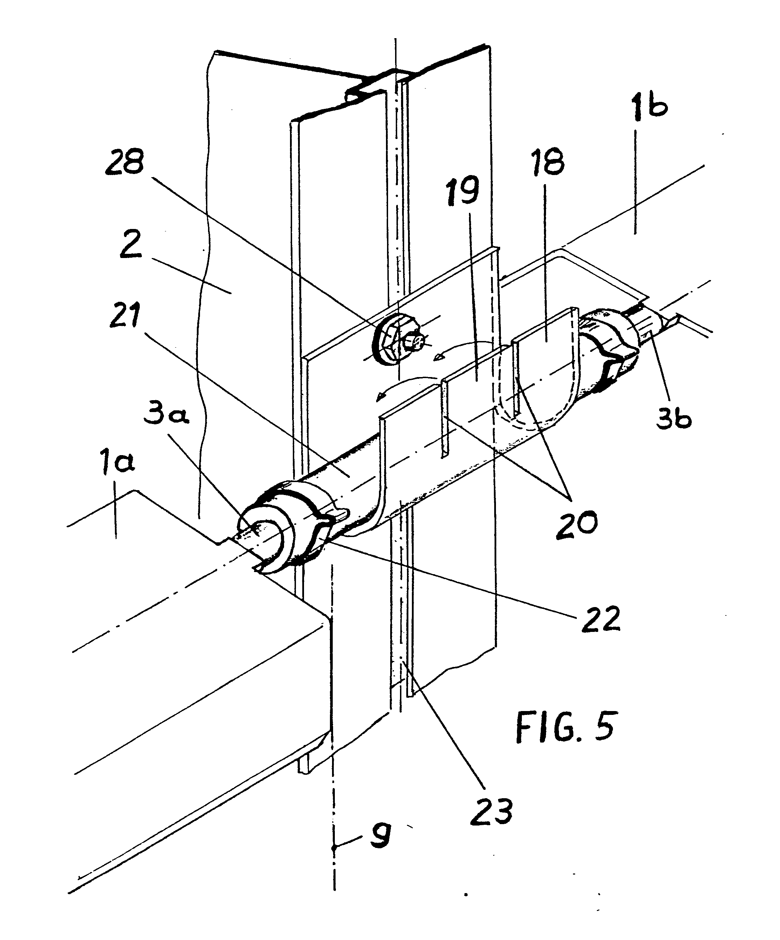

Fig. 5 zeigt perspektivisch einen Zaunpfosten 2, wobei nur die Vorderseite des I-Trägers dargestellt ist, der eine Schiebenut 23 enthält. In der Schiebenut kann ein Rohrverbindungshalter 18 mittels Befestigungsschraube 28 arretiert werden. Der Rohrverbindungshalter weist eine Mittelzunge 19 auf, die durch Umbiegung in Pfeilrichtung für eine Sicherung gegen Herausheben des elastischen Rohrverbinders 21 dient. Der elastische Rohrverbinder ist über Klemmschellen 22 mit den Rohranschlüssen 3a, 3b der Wärmetauscherprofile 1a, 1b verbunden.

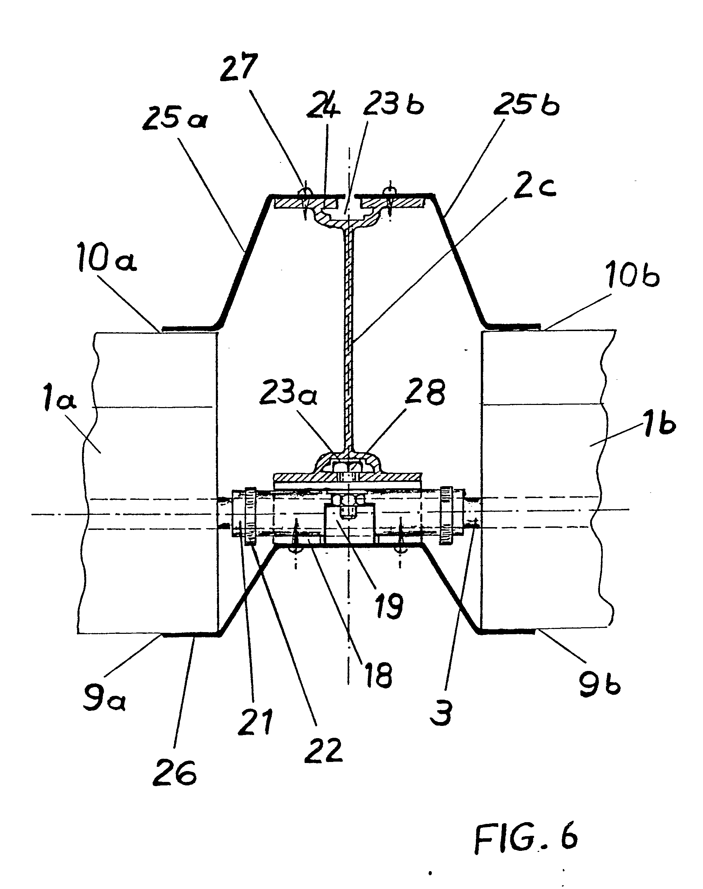

Eine andere Ansicht eines mittleren Zaunpfostens zeigt die Fig. 6 gemäss Schnitt II–II/Fig. 1. Der Zaunpfosten 2c in Form eines Doppel-T-Profils weist jeweils eine Schiebenut 23a, 23b für Befestigungsschrauben 28 auf. Die halbrunde Ausbuchtung 24 dient zur Führung des Kopfes bei alternativer Verwendung einer Flachrundschraube (DIN 603). An den hinteren T-Flanschen des Zaunpfostens sind Verkleidungsbleche 25a und 25b über Blechschrauben 27 befestigt. Das vordere Verkleidungsblech 26 ist an den beiden senkrecht stehenden Zungen des Halters 18 angeschraubt. Es ist deutlich zu erkennen, dass die Anschlagflächen 9a, 9b des vorderen Verkleidungsbleches an den vorderen Stegflächen der Wärmetauscherprofile 1a. 1b anliegen, während

die Anschlagflächen 10a, 10b der hinteren Verkleidungsbleche 25a, 25b gegen die Abkantungen der Wärmetauscherprofile 1a, 1b stossen.

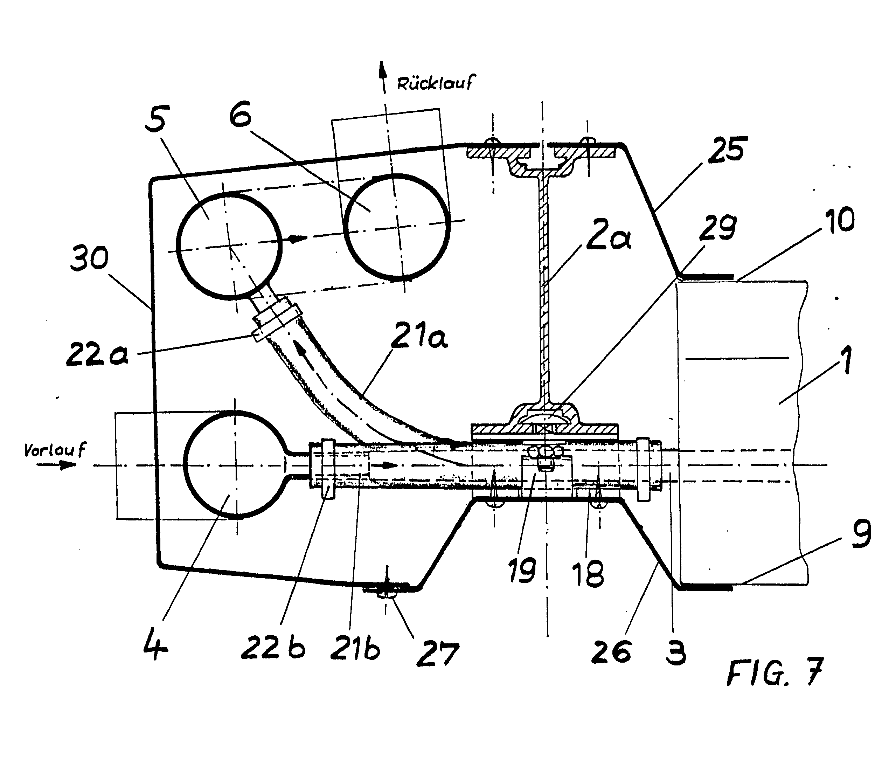

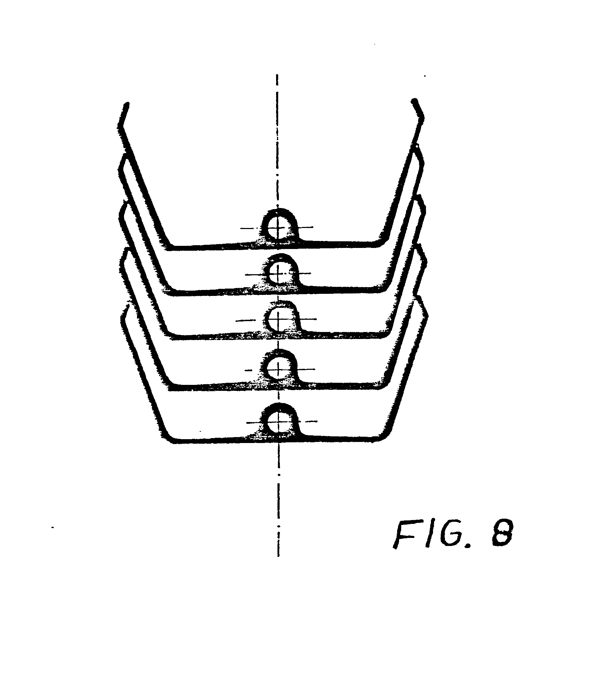

In Fig. 7 ist das Anfangsteil eines Absorberzaunes dargestellt gemäss Schnitt III–III/Fig. 1. Der Zaunpfosten 2a trägt zwei elastische Rohrverbinder 21a, 21b, die über jeweils eine Klemmschelle 22a, 22b mit der Rücklauf-Verteilerleitung 5 und der Vorlauf-Verteilerleitung 4 verbunden sind. Im Unterschied zu dem mittleren Zaunpfosten 2c ist hier eine einteilige trapezförmige Verkleidungshaube 30 vorgesehen, die für Anfangs- und Endpfosten identisch ausgebildet ist. Beim Transport dieser Verkleidungshauben können diese praktisch ebenfalls ineinander gestapelt werden, wie dies bei den trapezförmigen Wärmetauscherprofilen erfindungsgemäss möglich ist. Fig. 8 zeigt in gestapelter Form die trapezförmig ausgebildeten Wärmetauscherprofile.

Beim Aufstellen eines Absorberzaunes ist auf folgende Bedingungen zu achten:

Bei horizontaler Ausrichtung der einzelnen Wärmetauscherelemente übereinander muss gewährleistet sein, dass es zu keiner Schmutzablagerung kommen kann. Alle Flächen müssen so angeordnet sein, dass Wind, Regen und Schwitzwasser automatisch eine Säuberung des Elements bewirken.

Aus energietechnischen Gründen müssen alle Metallelemente, die die Umweltwärme aufnehmen sollen, so konstruiert sein, dass die durch das Blech aufgenommene Wärme unmittelbar zum Wärmeträgermedium weitergeleitet wird. Es ist daher vorgesehen, das mediumführende Rohrprofil mittig auf der wärmesammelnden Fläche anzuordnen. So kann über die Gesamtlänge des Zaunes gesehen eine gleichmässige Beaufschlagung der Wärmeträgerflüssigkeit erfolgen.

Höchste Effizienz beim Wärmeübergang wird bei der erfindungsgemässen Lösung dadurch erreicht, dass ein möglichst geringer Luftwiderstand des grossflächigen Wärmetauschers vorgesehen ist. Hierzu werden die durch den Wind angeblasenen Flächen mit einem besonderen Winkel angestellt. Dies ermöglicht einen maximalen Luftdurchsatz durch die natürliche Luftbewegung zwischen den einzelnen Elementen des Wärmetauschers.

Eine Erhöhung des Luftdurchsatzes bei gleichzeitiger Verbesserung des Wärmeüberganges von der Umluft auf das mediumführende Rohrprofil wird durch zusätzliche Durchbrüche in den Stegen der Profile erreicht. Im Bereich dieser Durchbrüche herrscht eine turbulente Strömung, die dafür sorgt, dass bereits ausgenutzte Luftmassen abgeführt und frische und ungenutzte Luft an die Wärmetauscherflächen herangetragen wird.

**Patentansprüche**

1. Absorber-Zaunanlage als grossflächiger Wärmetauscher für Gebäudeheizung oder Kühlung mittels Wärmepumpen, bestehend aus mehreren Wärmetauscherprofilen, die an Zaunpfosten angebracht sind, dadurch gekennzeichnet, dass die einzelnen Wärmetauscherprofile einen trapez- oder u-förmigen Querschnitt mit Basisflächen (11), Stegflächen (12a, b) und Abkantungen (13a, b) aufweisen, wobei die eine Stegfläche (12a) im wesentlichen parallel zu Verkleidungsprofilen (26) der Zaunpfosten (2a, b, c) verläuft und zur gegenüberliegenden Abkantung (13b) parallel angeordnet ist und die Basisflächen (11) der Wärmetauscherprofile in einem Winkel zwischen 5 und 30 Grad zur Horizontalen geneigt sind, wobei die Wärmetauscherprofile jeweils eine Wärmeträgerleitung (14) in der Mittelachse aufweisen.

2. Absorber-Zaunanlage nach Anspruch 1, dadurch gekennzeichnet, dass der Abstand (A) zwischen den Wärmetauscherprofilen etwa der Gesamtbreite (B) des Wärmetauscherprofils bzw. dem 2-fachen der Steghöhe (S) entspricht.

3. Absorber-Zaunanlage nach Anspruch 1 oder Anspruch 2, dadurch gekennzeichnet, dass eine Durchlüftungsspaltbreite (C) von null bis zur Grösse der Steghöhe (S) ausgebildet ist.

4. Absorber-Zaunanlage nach einem der vorhergehenden Ansprüche, dadurch gekennzeichnet, dass im Bereich der Stege Durchbrüche oder Teilausstanzungen mit Windleitzungen (16, 17) eingebracht sind.

5. Absorber-Zaunanlage nach Anspruch 4, dadurch gekennzeichnet, dass die Breite (t) dieser Durchbrüche oder Windleitzungen (16, 17) ein Drittel der Steghöhe (5) beträgt.

6. Absorber-Zaunanlage nach Anspruch 4 oder 5, dadurch gekennzeichnet, dass der Abstand (a) der Durchbrüche bzw. der Windleitzungen etwa gleich der Länge (1) oder bis zum Dreifachen dieses Masses gewählt wird.

7. Absorber-Zaunanlage nach einem der vorhergehenden Ansprüche, dadurch gekennzeichnet, dass Vor- und Rücklaufleitung (4, 5) sowie einer Druckausgleichsleitung (6) im Angangspfosten (2a) integriert sind und die jeweilige Wärmeentzugsleistung durch Hintereinanderschalten mehrerer Zaunfelder stufenweise dem jeweiligen Bedarf anpassbar ist.

8. Absorber-Zaunanlage nach einem der vorhergehenden Ansprüche, dadurch gekennzeichnet, dass ein Rohrverbindungshalter (18) aus u-förmigen Strangpressprofilen oder entsprechend geformten Blechstreifen vorhanden ist, wobei der äussere Steg durch zwei Sägeschnitte oder Ausstanzungen eine schmale Zunge (19) aufweist, die nach Montage der Wärmetauscherprofile durch Umschlagen einer Arretierung gegen Herausheben bildet.

9. Absorberzaun nach Anspruch 8, dadurch gekennzeichnet, dass auf der Zaunvorderseite hutförmige Verkleidungsbleche an die Rohrverbindungshalter (18) und z-förmige Verkleidungsbleche auf die Rückseite des Pfostenprofils befestigt sind, die gleichzeitig zur Ausrichtung und Verdrehsicherung der Wärmetauscherprofile (14) dienen.

10. Absorberzaun nach einem der vorhergehenden Ansprüche, dadurch gekennzeichnet, dass die Wärmetauscherprofile (14) in Strangpresstechnik, in Verbundbauweise aus abgekanteten oder rollgeformten Blechen mit hinterklebten Strangpressprofilen, aufgelöteten, geschweissten, eingeklemmten oder aufgepressten Rohren oder in «Rollbond»-Bauweise hergestellt sind.

## Claims

1. A large surface absorber heat exchange system forming a fence to be used with heat-pumps for heating or cooling buildings, the said system consisting of a plurality of heat-exchange sections affixed to fence posts, and characterized by the individual heat exchange sections having U-shaped or trapezoidal cross-sections with the base surfaces (11), frame surface (12a, b) and bevel edges (13a, b) essentially parallel to sheathing sections (26) of the fence posts (2a, b, c) and to the opposite bevel edge (13b), the base surfaces (11) of the heat exchange sections forming an angle between 5 to 30 degrees with the horizontal, the said heat exchange sections having a tube for the heat exchange medium placed in their control axes.

2. A heat exchange system according to claim 1, characterized by the distance (A) between the heat exchange sections being essentially the total width (B) of the heat exchange section or double the frame height (S).

3. A heat exchange system according to claim 1 or claim 2, characterized by having a ventilation slit width (C) from zero to the frame height (S).

4. A heat exchange system according to one of the preceding claims, characterized by having perforations or punched openings with air deflectors (16, 17) in the frames.

5. A heat exchange system according to claim 4, characterized by the width of the perforations or punched openings with air deflectors (16, 17) being a third of the frame height (5).

6. A heat exchange system according to claim 4 or 5, characterized by having the distance between perforations or air deflectors essentially equal to a length (L) or up to three times this length.

7. A heat exchange system according to one of the preceding claims, characterized by having the feed and return line (4, 5) and a pressure-equalizing line (6) integrated in the first fence post (2a) and adjusting the required heat withdrawal capacity by gradually adding more fence segments according to the existing demand.

8. A heat exchange system according to one of the preceding claims, characterized by having a tube connecting fixture (18) from U-shaped extruded profiles, the outer frame of which contains a thin flap (19) formed by two saw cuts or punchings, the said flap being turned upon erecting the heat exchange sections and thus preventing their lifting.

9. A heat exchange system integrated into a fence according to claim 8, characterized by having cap-like panels fixed to the tube-joining fixture (18) on the front face and z-shaped panels on the reverse face of the post profile, the said panels serving simultaneously as alignment aids and guards against distortion of the heat exchange sections (14).

10. A heat absorber fence according to one of the preceding claims, characterized by having the heat exchange sections (14) manufactured by extrusion, as composites from beveled or rolled sheets with backboarded extruded profiles, with tubes soldered, welded, clamped, or pressed-on by roll-bonding.

## Revendications

1. Clôture formant absorbeur, utilisée en tant qu'échangeur de chaleur de surface étendue pour le chauffage d'habitations ou pour le refroidissement à l'aide de pompes à chaleur, et constituée par plusieurs profilés utilisés pour l'échange thermique et qui sont montés sur des poteaux de clôture, caractérisée en ce que les différents profilés de l'échangeur de chaleur possèdent une section transversale trapézoïdale ou en forme de U, comportant des surfaces de base (11), des surfaces latérales formant ailes (12a, b) et des bords repliés (13a, b), une surface latérale (12a) étant essentiellement parallèle à des profilés d'habillage (26) des poteaux de clôture (2a, b, c) et parallèle au bord replié en vis-à-vis (13b), tandis que les surfaces de base (11) des profiles de l'échangeur de chaleur sont inclinées d'un angle compris entre 5 et 30 degrés par rapport à l'horizontale, les profilés de l'échangeur de chaleur comportant respectivement au niveau de leur axe médian, une canalisation (14) pour un fluide caloporteur.

2. Clôture formant absorbeur suivant la revendication 1, caractérisée par le fait que la distance (A) entre les profilés de l'échangeur de chaleur correspond approximativement à la largeur totale (B) des profilés ou au double de la hauteur (S) des ailes.

3. Clôture formant absorbeur selon la revendication 1 ou 2, caractérisée en ce qu'une fente d'aération (C) est formée avec une largeur allant de la valeur nulle jusqu'à la taille de la hauteur (S) des ailes.

4. Clôture formant absorbeur suivant l'une des revendications précédentes, caractérisée en ce que des perçages ou des découpes partielles munies de languettes (16, 17) de guidage du vent sont ménagées dans la zone des ailes.

5. Clôture formant absorbeur selon la revendication 4, caractérisée en ce que la largeur (t) de ces perçages ou des languettes (16, 17) de guidage du vent est égale au tiers de la hauteur (S) des ailes.

6. Clôture formant absorbeur selon la revendication 4 ou 5, caractérisée par le fait que la distance (a) entre les perçages et les languettes de guidage du vent est choisie égale approximativement à la longueur (1) ou jusqu'au triple de cette valeur.

7. Clôture formant absorbeur selon l'une des revendications précédentes caractérisée par le fait que la canalisation aller (4) et la canalisation retour (5) ainsi qu'une canalisation de compensation de pression (6) sont intégrées dans le poteau de départ (2a) et que la puissance d'absorption de chaleur peut être adaptée, par échelons, aux besoins respectifs grâce au branchement en série de plusieurs panneaux de clôture.

8. Clôture formant absorbeur selon l'une des revendications précédentes caractérisée en ce qu'il est prévu un support (18) de liaison des tubes, constitué par des profilés extrudés en forme de U ou par des bandes de tôle conformées de façon correspondante, la branche extérieure comportant une petite languette (19), qui est formée par deux traits de scie ou par deux découpes et qui constitue par rabattement, après le montage des profilés de l'échangeur de chaleur, un dispositif de blocage contre tout dégagement par soulèvement.

9. Clôture formant absorbeur suivant la revendication 8, caractérisée par le fait que sur la face avant de la clôture, des tôles de revêtement en forme de chapeau sont fixées sur le support (18) de liaison des tubes et que des tôles de revêtement en forme de Z sont fixées sur la face arrière du profilé du poteau, ces tôles étant utilisées simultanément pour l'alignement et le blocage en rotation des profilés (14) de l'échangeur de chaleur.

10. Clôture formant absorbeur suivant l'une des revendications précédentes, caractérisée par le fait que les profilés (14) de l'échangeur de chaleur sont réalisés selon la technique d'extrusion, selon le mode de construction composite avec des tôles repliées ou façonnées par laminage, avec des profilés extrudés collés derrière elles, des tubes soudés, brasés, bloqués par serrage ou emmanchés à force, ou bien selon le mode de construction «Roll-bond».

FIG. 1

0 050 180

FIG. 2

FIG. 3

FIG. 4

FIG. 5

FIG. 6

FIG. 7

FIG. 8